(19) Europäisches Patentamt
European Patent Office
Office européen des brevets

(11) **EP 1 750 018 A2**

(12) **EUROPEAN PATENT APPLICATION**

(43) Date of publication:
**07.02.2007 Bulletin 2007/06**

(51) Int Cl.:
***F15D 1/06*** (2006.01)

(21) Application number: **06254002.6**

(22) Date of filing: **31.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **03.08.2005 US 705239 P**
**17.07.2006 US 487023**

(71) Applicant: **General Electric Company**
**Schenectady, NY 12345 (US)**

(72) Inventors:
• **Bhate, Nitin**
**Rexford**
**New York 12148 (US)**
• **Hsu, Ming Feng**
**Saratogo Springs**
**New York 12866 (US)**
• **O'Neill, Gregory Allen**
**Clifton Park**
**New York 12065 (US)**

• **Deng, Tao**
**Clifton Park**
**New York 12065 (US)**
• **Okuyama, Shannon Maile**
**Duanesburg**
**New York 12056 (US)**
• **Stein, Judith**
**Schenectady**
**New York 12308 (US)**
• **Turnquist, Norman Arnold**
**Sloansville**
**New York 12160 (US)**
• **Varanasi, Kripa Kiran**
**Clifton Park**
**New York 12065 (US)**

(74) Representative: **Bedford, Grant Richard et al**
**London Patent Operation**
**GE International Inc**
**15 John Adam Street**
**London WC2N 6LU (GB)**

(54) **Surfaces and articles resistant to impacting liquids**

(57) Articles resistant to wetting by impinging droplets of liquid are presented, as well as a method for resisting wetting of an article by impinging droplets of liquid. For example, an article (300) comprises a surface portion (320) oriented to intercept droplets (310) of a liquid impinging upon the article (300). This surface portion (320) comprises a plurality of surface features (330), wherein the plurality of surface features (330) has a median size, *a,* a median depth, *h,* and a median spacing, *b.* The parameters *a*, *b,* and *h* are selected to generate, in response to a droplet of the liquid impinging upon the surface portion (320) at a relative velocity *v,* a back pressure that is greater than a Bernoulli pressure generated by the drop upon impact on the surface portion (320). The method comprises providing a surface portion (320) oriented to intercept incoming droplets (310) of a liquid, the surface portion (320) comprising a plurality of features (330) so disposed on the surface to generate, in response to a drop of liquid impinging upon the surface portion (320) at a relative velocity of at least 5 m/s, a back pressure that is greater than a Bernoulli pressure generated by the drop upon impact on the surface portion (320); and exposing the surface portion (320) to droplets (310) of liquid moving at a velocity of at least about 5 m/s relative to the surface portion (320) so that the droplets (310) impinge upon the surface portion (320).

FIG.4

## Description

This invention relates to surfaces having low liquid wettability. More particularly, this invention relates to surfaces designed to provide low wettability in situations involving liquids impacting upon the surface. This invention also relates to articles comprising such surfaces, and methods for making such articles and surfaces.

The "liquid wettability", or "wettability," of a solid surface is determined by observing the nature of the interaction occurring between the surface and a drop of a given liquid disposed on the surface. When impacting on the surface, droplets initially spread over a relatively wide area, but contract to reduce this contact area. A surface having a high wettability for the liquid tends to allow the drop to spread and remain over a relatively wide area of the surface (thereby "wetting" the surface). In the extreme case, the liquid spreads into a film over the surface. On the other hand, where the surface has a low wettability for the liquid, the liquid tends to retain a well-formed, ball-shaped drop at rest on the surface. In the extreme case, the liquid forms nearly spherical drops that easily roll off of the surface at the slightest disturbance. In impact situations on a surface having extremely low wettability, the drop may lift off completely from the surface as it contracts.

The extent to which a liquid is able to wet a solid surface plays a significant role in determining how the liquid and solid will interact with each other. A high degree of wetting results in relatively large areas of liquid-solid contact, and is desirable in applications where a considerable amount of interaction between the two surfaces is beneficial, such as, for example, adhesive and coating applications. By way of example, so-called "hydrophilic" materials have relatively high wettability in the presence of water, resulting in a high degree of "sheeting" of the water over the solid surface. Conversely, for applications requiring low solid-liquid interaction, the wettability is generally kept as low as possible in order to promote the formation of liquid drops having minimal contact area with the solid surface. "Hydrophobic" materials have relatively low water wettability; so-called "superhydrophobic" materials have even lower water wettability, resulting in surfaces that in some cases may seem to repel any water impinging on the surface due to the nature of the interaction between water drops and the solid surface.

Articles having tailored surface properties may be used in a broad range of applications in areas such as transportation, chemical processing, health care, and textiles. Many of these applications involve the use of articles having a surface with a relatively low liquid wettability to reduce the interaction between the article surface and various liquids. In particular, the wetting properties of a material can be tailored to produce surfaces having properties that include low-drag or low-friction, self-cleaning capability, and resistance to icing, fouling, and fogging.

Many applications would benefit from the use of components that are resistant to wetting by liquid droplets. For example, aircraft components, such as airframe and engine components, and wind turbine components are susceptible to icing because droplets of supercooled water strike the component surface and remain in contact with the surface while the droplets freeze and accumulate as an agglomerated mass of ice. As another example, steam turbine blades are subject to erosion due to the impact of drops of water. In these and other applications, the wetting resistance must extend to drops that strike the surface with a significant velocity relative to the surface. Metallic components are particularly susceptible to icing, fouling, etc., because metals generally have a moderate to high wettability for common liquids such as water.

Therefore, there is a need to provide articles, such as metal articles, with durable surfaces having low liquid wettability, particularly in applications where the liquid tends to strike the surface with significant velocity. Moreover, there is a need for methods for making such surfaces and articles having such surfaces.

Various embodiments of the present invention meet these and other needs. One embodiment is an article resistant to wetting by liquid droplets impinging upon the article. The article comprises a surface portion oriented to intercept droplets of a liquid impinging upon the article. This surface portion comprises a plurality of pores, wherein the plurality of pores has a median size, $a$, a median depth, $h$, and a median spacing, $b$. The parameters $a, b$, and $h$ are selected to generate, in response to a droplet of the liquid impinging upon the surface portion at a relative velocity $v$, a back pressure that is greater than a Bernoulli pressure generated by the drop upon impact on the surface portion.

Another embodiment is an article resistant to wetting by liquid droplets impinging upon the article. The article comprises a surface portion oriented to intercept incoming droplets of a liquid, and the surface portion comprises a plurality of elevations, wherein the plurality of elevations has a median size, $a$; a median height, $h$; and a median spacing, $b$. The parameters $a, b, h,$ are selected to generate, in response to a droplet of the liquid having a droplet size of at least about 1 micrometer impinging upon the surface portion at a relative velocity of at least 5 meters per second, a back pressure that is greater than a Bernoulli pressure generated by the drop upon impact on the surface portion.

Another embodiment is a component of a steam turbine assembly. The component comprises a surface portion oriented to intercept incoming droplets of a liquid entrained in a fluid flow path of the steam turbine assembly, and the surface portion comprises a plurality of elevations. This plurality of elevations has a median size, $a$; a median height, $h$; and a median spacing, $b$, which are selected to generate, in response to a droplet of the liquid impinging upon the surface portion at a relative velocity $v$, a back pressure that is greater than a Bernoulli pressure generated by the drop upon impact on the surface portion.

Another embodiment is a method for resisting wetting of an article by impinging droplets of liquid. The method comprises providing a surface portion oriented to intercept incoming droplets of a liquid, the surface portion comprising a plurality of features so disposed on the surface to generate, in response to a drop of liquid impinging upon the surface portion at a relative velocity of at least 5 m/s, a back pressure that is greater than a Bernoulli pressure generated by the drop upon impact on the surface portion; and exposing the surface portion to droplets of liquid moving at a velocity of at least about 5 m/s relative to the surface portion so that the droplets impinge upon the surface portion.

Various features, aspects, and advantages of the present invention will become better understood when the following detailed description is read with reference to the accompanying drawings in which like characters represent like parts throughout the drawings, wherein:

> Figures 1 and 2 are schematic cross-sectional views of a droplet disposed on a textured surface;
>
> Figure 3 is a schematic cross-sectional view of an exemplary embodiment of the present invention;
>
> Figure 4 is a schematic cross-sectional view of another embodiment of the present invention;
>
> Figure 5 is a plot of pore radius versus droplet velocity;
>
> Figure 6 is a schematic cross-sectional view of an exemplary embodiment of the present invention;
>
> Figure 7 is a plot of post size versus relative spacing for a range of different droplet velocities;
>
> Figure 8 is a plot of maximum droplet radius prior to roll-off of the drop from a surface versus the relative spacing of features disposed on the surface; and
>
> Figures 9, 10, and 11 are schematic cross-sectional views of exemplary embodiments of the present invention.

In the following description, like reference characters designate like or corresponding parts throughout the several views shown in the figures. It is also understood that terms such as "top," "bottom," "outward," "inward," and the like are words of convenience and are not to be construed as limiting terms. Furthermore, whenever a particular feature is said to comprise or consist of at least one of a number of elements of a group and combinations thereof, it is understood that the feature may comprise or consist of any of the elements of the group, either individually or in combination with any of the other elements of that group.

The use of textured surfaces has been shown in some cases to reduce the wettability of a surface in comparison to a surface of the same material without texture. However, the interaction of a textured surface with a drop that is placed gently on the surface is often quite different than the interaction observed for a drop that strikes the surface at a significant velocity. For example, such an impinging drop may be observed to stick to the surface whereas a gently placed drop may readily roll off the same surface. This behavior has implications in practical applications, where impinging liquids such as driving rain are commonplace.

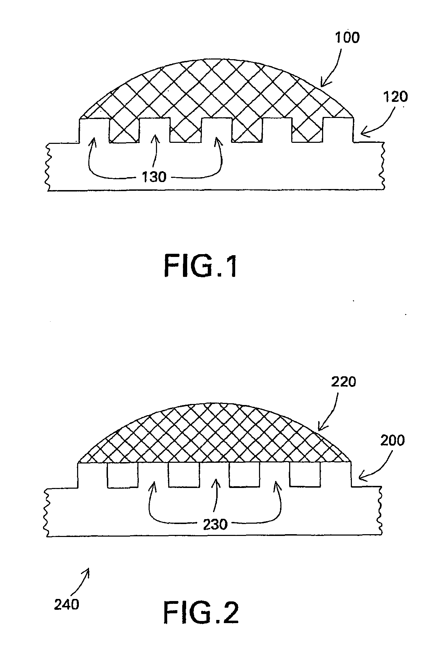

The source of the lack of resistance to impacting droplets appears to lie in the failure of many surface textures to resist the impact pressure generated by the drop. Figure 1 demonstrates the situation where a drop 100 has struck a surface 120 having features 130 that make up a texture on surface 120, where the pressure associated with the surface 120 to resist wetting is much lower than the pressure exerted by drop 100 at impact. As a result, drop 100 is able to penetrate into the spaces between features 130 and to wet a significant portion of the surface area of textured surface 120. This extensive contact serves to pin drop 100 to surface 120, which can lead to undesirable results such as icing, fouling, etc. Contrast this situation with that depicted in Figure 2, where the pressure generated by surface 200 is comparable to, or higher than, the pressure generated by drop 220 upon impact. Here, the drop is unable to penetrate into the spaces between features 230, and only contacts the tops of features 230. The comparatively low contact area relative to the Figure 1 scenario suggests that removal of drop 220 from surface 200 will be desirably easier than removing drop 100 from surface 120. This ease of removal may promote shedding of the drop 220 from the surface 200 prior to freezing of the drop 220, thereby reducing or preventing the accumulation of ice, for example; or in another example, the drop 220 is shed prior to agglomeration with one or more other drops on the surface 200, maintaining a low mean drop size in a steam turbine fluid path and reducing the erosive effect of droplet impingement on turbine blades.

Without being limited by theory, the present inventors believe that the following analysis provides a basis for the design of surface textures that exhibit remarkable resistance to impacting drops when compared to other textured surfaces. This analysis is believed to describe the source of the problem of why many textured surfaces exhibit undesirably low resistance to wetting by drops striking the surface at a significant velocity, when the same surfaces show high resistance to wetting by static drops of the same liquid.

A drop of liquid impacting a textured surface exerts pressure on the surface, and this pressure tends to promote drop wetting. The magnitude and nature of this pressure is time dependent. At the instant of impact, the pressure exerted is primarily due to the so-called "water hammer pressure," which is proportional to the product of the velocity of the drop and the velocity of sound in the liquid medium. After some tens of nanoseconds, the pressure exerted by the drop is primarily due to the Bernoulli pressure of the drop, which is proportional to the square of the velocity of the drop. It will be appreciated that the water hammer pressure is generally much higher than the Bernoulli pressure.

The textured surface upon which the drop strikes causes generation of pressure (also referred to herein as "back pressure") on the drop, and this back pressure tends to resist drop wetting. Depending on the nature of the features comprising the surface texture, the back pressure may have one or multiple components. Capillary pressure exists because there is an energy barrier associated with wetting progressively larger quantities of a surface area. Because capillary pressure depends on the extent of interaction between fluid and surfaces, it is typically a function in part of the geometry of the system. For example, an air-water system interacting in a cylindrical tube of radius r has a capillary pressure described by the so-called Laplace equation:

$$P_c = \frac{2\sigma Cos\theta}{r}$$

where $\sigma$ is the air-water surface tension, $\theta$ is the contact angle water makes with the tube wall, and r is the radius of the tube. The capillary pressure may thus be predicted by carefully describing the geometry of the surface texture and incorporating this description into the force balance analysis used to derive the capillary pressure equation. Conversely, and germane to embodiments of the present invention, the geometry of a surface may be designed to provide a predicted capillary pressure of a desired value.

In certain situations, other factors contribute to the generation of back pressure. For example, where the drop impacts on a porous surface, gas trapped inside the pores is compressed. The pressure of the compressed gas is elevated, providing additional resistance to penetration by the impacting drop.

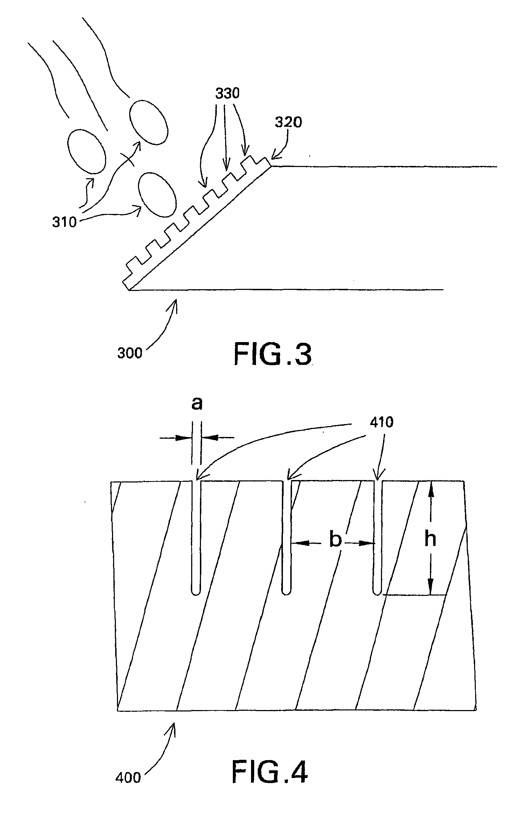

In accordance with various embodiments of the present invention, an article 300 (Figure 3) resistant to wetting by liquid droplets 310 impinging upon the article 300 thus comprises a surface portion 320 oriented to intercept the droplets 310, and this surface portion 320 comprises a plurality of surface features 330 designed to facilitate the generation of a back pressure that is equal to or greater than the wetting-promoting pressure generated by an impacting drop 310. It will be appreciated that a surface "oriented" to intercept droplets is not limited to a surface oriented normal to droplet motion relative to the surface; an interception of a droplet at any angle of impact is contemplated in various embodiments of the present invention. As described above, the wetting-promoting pressure is time-dependent and comprises water hammer pressure and/or Bernoulli pressure, depending on the time elapsed after drop impact. Where the water hammer pressure (which generally is greater than the Bernoulli pressure, as described above) is less than the back pressure, the drop is expected to be completely repelled from the spaces between the surface features making up the texture, and the drop will simply contact the top of the surface features as depicted in Figure 2. In practice it is very difficult to design a surface that will allow generation of sufficient back pressure to overcome the water hammer pressure, so at least some wetting of the surface features is usually expected. However, the water hammer pressure is very short-lived and localized, and in many circumstances the drop wetting pressure apparently becomes dominated by Bernoulli pressure before significantly detrimental amounts of texture wetting is established. Therefore, in practical systems the back pressure should at least meet or exceed the Bernoulli pressure, as there may be occasions where exceeding the water hammer pressure is not critical to performance. Consequently, in certain embodiments of the present invention, the configuration of the surface features 330 is selected to generate, in response to a droplet of liquid 310 impinging on the surface portion 320 at a relative velocity (v), a back pressure that is greater than a Bernoulli pressure generated by the droplet 310 upon impact on the surface portion 320.

Surface feature 330 configuration may be selected to generate the appropriate level of back pressure based on knowledge of the above analysis (which determines the back pressure generated in response to drop impact), coupled with a knowledge of the expected value of droplet velocity and other droplet parameters for a given application (which determines the Bernoulli pressure of the drop). In steam turbine component applications, as but one example, the mean velocity of water droplets and other drop parameters such as size may be known based on the nominal operating conditions of the turbine. This mean velocity may be used as v in the above analysis to calculate an expected value for the Bernoulli pressure of the droplets impinging upon components of the turbine, and, employing the above analysis, a configuration of surface features 330 may be designed for a surface portion 320 of the component article 300 where the back pressure generated upon impact of these drops meets or exceeds the Bernoulli pressure exerted by the drops.

The surface features 330 may be elevations, such as cylindrical posts, rectangular prisms, pyramidal prisms, dendrites, nanorods, nanotubes, particle fragments, abrasion marks, or any other protrusion above the surface of the article 300. Alternatively, features 330 may be depressions disposed to some depth below the surface, such as holes, wells, and the like. The term "pore" is used herein to denote all such open spaces disposed to some depth below the surface of an article; this term should not be construed to limit the type of feature according to the method or process that disposed the pore. For example, a hole drilled into a surface is considered a "pore" for the purposes of this description.

In one embodiment, referring to Figure 4, surface portion 400 comprises a plurality of pores 410, and the plurality of pores 410 has a median pore size, $a$, a median pore depth, $h$, and a median pore spacing, $b$. The quantities $a$, $b$, and $h$ are selected to generate back pressure in excess of an impacting droplet's Bernoulli pressure, as described more generally, above. In some embodiments, a majority of the pores are isolated from each other; that is, there is little to no interconnection among pores. In certain embodiments, substantially all of the pores in the plurality are isolated from each other. Isolated pores, which have comparatively less volume than networks of connected pores, may facilitate the exertion of increased back pressure due to the rapid compression of vapor trapped inside the pore 410, as described above.

Various configuration parameters may be defined to describe the configuration of the plurality of pores 410. These parameters, and the selected ranges defined herein, have been chosen based on the analysis set forth above. For these embodiments, a parameter found to be of high significance in the generation of back pressure is the pore size, $a$. Generally, the magnitude of the back pressure generated upon drop impact is reduced as $a$ is increased, and so pores having relatively large pore sizes may be selected for use in applications where drop impact velocity is expected to be relatively low, while smaller pore sizes may be selected for applications where impact velocities are expected to be high.

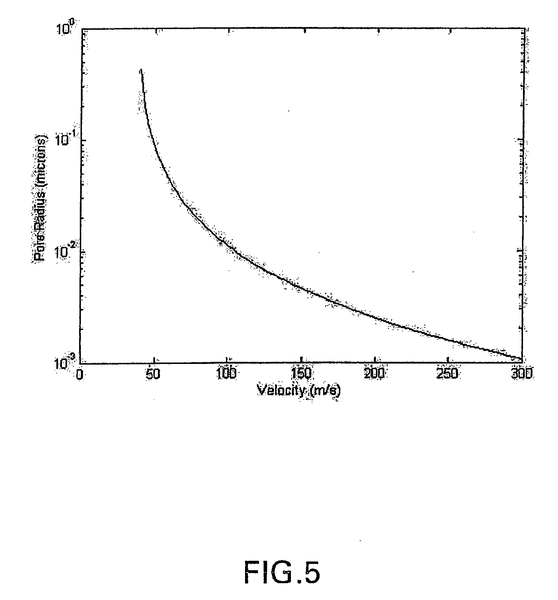

Figure 5 illustrates the effect of pore size on the ability of a pore to facilitate the generation of back pressure. In the analysis that generated this figure, the inherent wettability (that is, the wettability of an untextured, smooth surface) was assumed to be sufficient to generate a contact angle of 110 degrees, and droplet impact was assumed to occur for drops traveling in a line perpendicular to the surface. It should be noted here and throughout that assuming perpendicular (normal) impact results in a conservative design, as normal impact is the worst-case scenario with respect to pressure exerted by the drop on the surface. Impacts occurring at different angles than right angles with the surface result in a lower pressure being exerted by the drop. The plotted curve denotes values for pore radius (i.e., $a/2$) and drop velocity, where the Bernoulli pressure of the drop is expected to equal the back pressure generated at impact, taking into account both the capillary pressure and the resistance due to gas compression within the pore. The pressure resulting due to the gas compression in the pores was calculated using a penetration depth of three-quarters of the pore height. This depth was chosen to illustrate the effect of gas compression pressure. Pore sizes in the regions of the plot that fall beneath the curve are expected to provide very good resistance to drop wetting, while significant wetting is expected for situations above the curve. It will be apparent to those skilled in the art that embodiments of the present invention include any point that resides in the area on or beneath the curve shown in Figure 5. In some embodiments, $a$ is up to about 100 micrometers, such as up to 10 micrometers or up to 1 micrometer; these values of $a$, according to Figure 5, are expected to provide suitable back pressure for lower velocity applications, those where drop velocities are not expected to exceed about 40 m/s. In certain embodiments, $a$ is up to about 100 nanometers (nm), which according to Figure 5 may provide suitable resistance to wetting for drop velocities up to about 60 m/s. In particular embodiments requiring even higher back pressure generation, $a$ is up to about 20 nm. It will be appreciated that $a$ is intended to have some non-zero value, but that very small values of $a$, as low as 1 nm or even less if practicable, are desirable to provide the highest levels of wetting resistance in very high velocity applications.

Another parameter of interest in these embodiments is the aspect ratio of the pores, defined by the ratio $h/a$. For embodiments where surface portion 400 comprises a plurality of pores 410, aspect ratio appears to have little effect on the generation of back pressure. However, this ratio is significant where the surface may be subject to erosive or mechanical wear over time. In such applications, a suitably high $h/a$ is desirable to ensure that the pores will persist in spite of wear at the surface. The thickness of surface portion 400, and thus h, are selected based on the expected rate of wear and the desired useful lifetime of surface portion 400.

The relative pore spacing, defined by the ratio $b/a$, may also be a parameter of interest in certain embodiments. Generally, as $b/a$ decreases, the number of pores increases and the amount of solid surface available for the impinging drops to cling to decreases. Therefore, comparatively low relative pore spacings may facilitate fast roll-off of the impinging liquid, reduced ice adhesion, or both, due to the lower available surface contact area. In some embodiments, $b/a$ is up to about 10. Where even further enhancements in roll-off promotion, ice adhesion reduction, or both, are desirable, this ratio is up to about 6, and in particular embodiments $b/a$ is up to about 4.

To take further advantage of the benefits afforded by the embodiments described above, more than one parameter may be constrained in any combination of the embodiments described above. For example, in some embodiments $a$ is up to about 10 micrometers, and the ratio of $b/a$ is up to about 4; while in other embodiments $a$ is up to about 10 micrometers, and the ratio of $b/a$ is up to about 6.

The embodiments described above lend themselves to several useful applications. For example, certain embodiments of the present invention are believed to reduce the formation, adhesion, and/or accumulation of ice on such surfaces. Icing takes place when a water droplet (sometimes supercooled) impinges upon the surface of an article, such as an aircraft component or a component of a turbine (for example, a gas or wind turbine), and freezes on the surface. The build-up of ice on aircraft, turbine components, and other equipment exposed to the weather, such as power lines, antennas, and solar cells, reduces performance, increases safety risks, and incurs costs for periodic ice removal operations. In certain embodiments, article 420 comprises a component of an aircraft, such as, for example, a wing, tail, fuselage, or an aircraft engine component. In still further embodiments, article 420 is a component of a turbine assembly, such as a wind turbine assembly, a gas turbine assembly, or a steam turbine assembly.

Non-limiting examples of aircraft engine components that are suitable as articles in embodiments of the present invention include the nacelle inlet lip, splitter leading edge, booster inlet guide vanes, fan outlet guide vanes, sensors and/or their shields, and fan blades. Certain components, such as fan blades, while sometimes made of metal, are often made of carbon-based composite materials. In such cases surface portion 400 may be a thin metallic foil attached to the composite, where features, such as the pores 410 described above, are disposed on the foil. In other cases, features 410 may be disposed directly onto the composite article via a coating method as described above, or the composite article itself may be machined or otherwise formed to have integral features at its surface.

Icing is a significant problem for wind turbines, as the build-up of ice on various components such as anemometers and turbine blades reduces the efficiency and increases the safety risks of wind turbine operations. Wind turbine blades and other components are often made of lightweight composite materials such as fiberglass in order to save weight, and the build-up of ice can deleteriously load the blades to a point that significantly reduces their effectiveness. In certain embodiments of the present invention, article 420 is a component, such as a turbine blade, anemometer, gearbox, or other component, of a wind turbine assembly. Features 410 may be disposed on such components in a manner similar to that described above for composite fan blades in jet engines.

As other components exposed to the weather are also adversely affected by ice and/or water accumulation, other embodiments of article 420 include, for instance, components of other items exposed to the weather, such as power lines, antennas, and solar cells. The ability to resist wetting by impacting precipitation may benefit a host of components that are so exposed, and the examples presented herein should not be read as limiting embodiments of the present invention to only those named applications.

As described above, another suitable application for embodiments described above is moisture control in steam turbine assemblies, where the ability to shed water droplets from components before they have a chance to agglomerate into substantially larger drops helps to avoid component damage due to erosion, and reduces aerodynamic and thermodynamic performance losses. As described above, in some embodiments article 420 is a component of a turbine assembly, such as a wind turbine assembly, a gas turbine assembly, or a steam turbine assembly. Suitable components for gas and/or steam turbine assembly applications include a turbine blade, a low-pressure steam turbine blade, a high-pressure steam turbine blade, a compressor blade, a condenser, and a stator component.

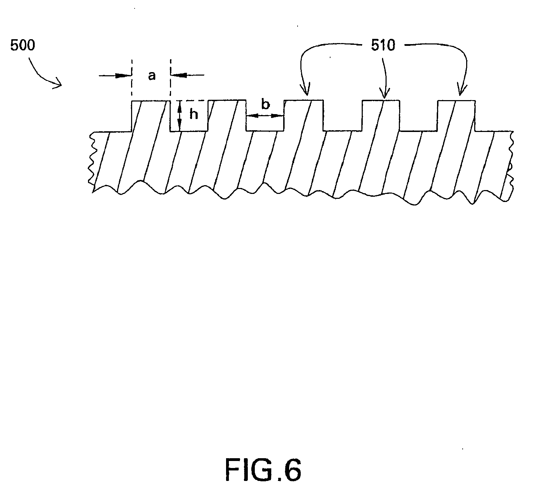

In another embodiment, referring to Figure 6, surface portion 500 comprises a plurality of elevations 510, and the plurality of elevations 510 has a median size, $a$; a median height, $h$; and a median spacing, $b$. The quantities $a$, $b$, and $h$ are selected to generate, in response to a droplet of the liquid having a droplet size of at least about 1 micrometer impinging upon the surface portion at a relative velocity of at least 5 meters per second, a back pressure that is greater than a Bernoulli pressure generated by the drop upon impact on the surface portion. In some embodiments, the drop size is at least about 10 micrometers, and the velocity is at least about 50 meters per second. The ability to resist wetting by drops of this size and having this speed may enable surface portion 510 to be used in applications such as wind turbine assembly components, aircraft components, and other components exposed to the weather, as described above, where resistance to icing and the ability quickly to shed droplets of liquid are desirable characteristics.

As described previously, certain ranges for certain feature configuration parameters may be particularly effective in resisting wetting under these conditions. In contrast to embodiments where the surface features are pores, for elevations the relative feature spacing $b/a$ significantly affects back pressure. A reduction in $b/a$ generally results in a higher back pressure, but at the same time the surface area available for drop contact becomes increased. A tradeoff thus may exist between the need for high back pressure and the need to reduce drop adhesion to the surface.

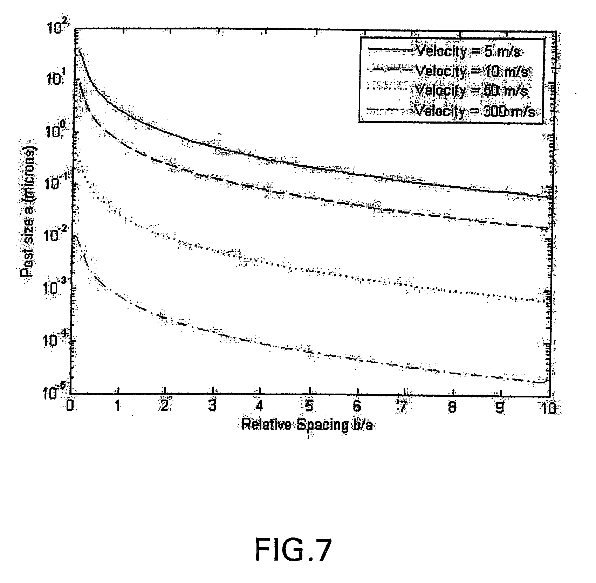

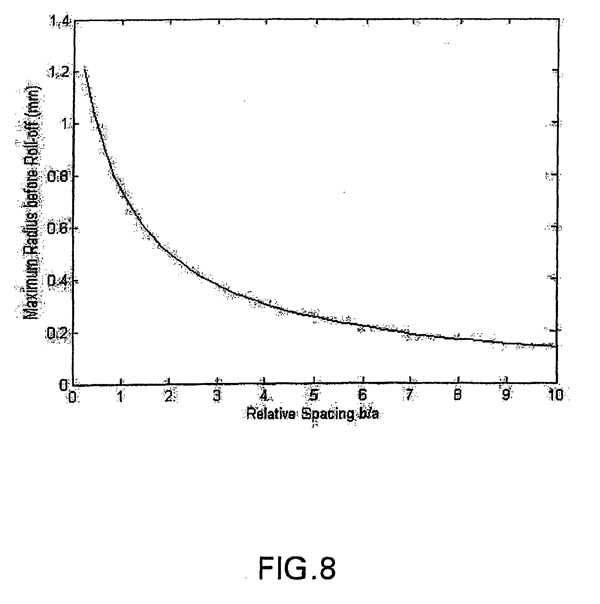

Figure 7 illustrates the effect of relative feature spacing and feature size on the generation of back pressure. As shown in this figure, the effect is also a function of the velocity of the incoming drop, in contrast to embodiments employing pores, described above. In Figure 7, surface feature designs characterized by size and relative spacing lying below the curve plotted for a given drop velocity are expected to provide significant wetting resistance for drops having that given velocity. Clearly, the effective "design space" denoted by the area under the curve becomes smaller as the expected velocity becomes higher, pushing the allowable feature sizes to lower values and reducing the allowable spacing. Figure 8 illustrates the effect of relative spacing ($b/a$) on roll-off behavior. Here, the drop size prior to roll-off of a vertical surface is plotted against $b/a$, and clearly roll-off is facilitated more easily at comparatively high relative spacing values.

Because posts have an open structure (in contrast with pores), the impact resistance due to the gas compression effect can become negligible. Hence, the feature aspect ratio, *h/a,* can play an important role in the wetting resistance of the surface from the consideration of the kinetics of droplet penetration into the texture. However, the effect is still relatively small compared to the effects for size and relative spacing as described above. Again, a significant consideration in selecting *h* in these embodiments the expected wear rate and the desired life of the surface portion 510.

Elevation feature parameters, according to embodiments of the present invention, are thus selected while taking the tradeoff described above and the effects of wear into consideration. In one embodiment, *a* is up to about 300 micrometers, and *b/a* is up to about 10. In particular embodiments, *a* is up to about 50 micrometers, and *b/a* is up to about 10.

In some embodiments, the plurality of elevations 510 comprises an ordered (that is, a non-random) array disposed on surface portion 500, though random distributions of features 510 may be effective under certain circumstances. Ordered arrays, in some embodiments, comprise features such as cylindrical posts, rectangular prisms, and pyramidal prisms. Random distributions may comprise these features, and in some embodiments they may comprise such features as dendrites, nanorods, nanotubes, particle fragments, and abrasion marks. It should be noted that whether the plurality of features 510 is randomly or non-randomly distributed has no bearing on the specific type of feature or features making up the plurality.

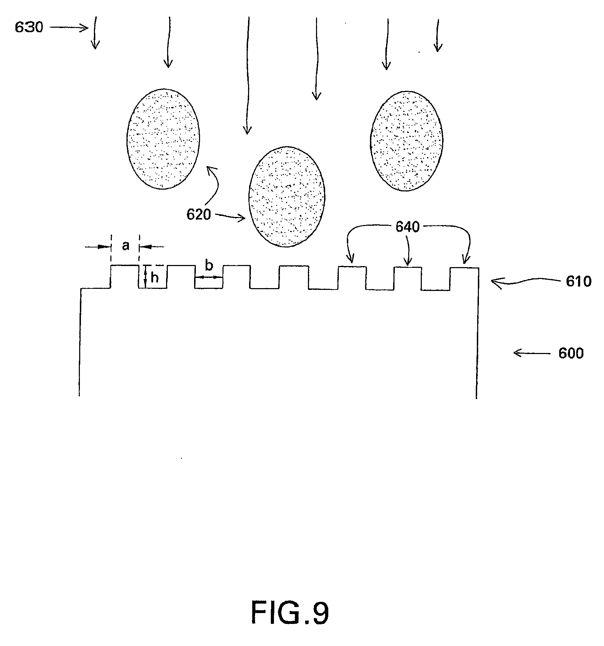

Another embodiment of the present invention is a component 600 of a steam turbine assembly (Figure 9), such as a turbine blade (rotating component), a turbine vane (stationary component) or a compressor blade. Component 600 comprises a surface portion 610 oriented to intercept incoming droplets 620 of a liquid entrained in a fluid flow path 630 of the steam turbine assembly. Surface portion 610 comprises a plurality of elevations 640, and this plurality has a median feature size, *a*; a median feature height, *h*; and a median feature spacing, *b* as these parameters are depicted in Figure 6. In this embodiment, *a, b*, and *h* are selected to generate, in response to a droplet 620 of the liquid impinging upon the surface portion 610 at a relative velocity *v,* a back pressure that is greater than a Bernoulli pressure generated by the drop upon impact on the surface portion. The distribution and shape of elevations 640 in this embodiment are the same as those described for the embodiment depicted in Figure 6.

In many high-pressure steam turbine applications, expected drop size is into the tens of micrometers, and *v* is at least about 150 m/sec. Although low pressure steam turbine conditions generate much larger drop sizes (into the hundreds of micrometers), the drop velocity, and hence the impact pressure, does not vary substantially from that observed in high pressure applications. Accordingly, the surface texture required to generate effective back pressure is similar for high and low pressure steam turbine applications. In some of these embodiments *a* is up to about 5 micrometers, and *b/a* is up to about 10.

Further embodiments of the present invention include a method for resisting wetting of an article 300 (Figure 3) by impinging droplets 310 of liquid. The method comprises providing article 300 with a surface portion 320 that is oriented to intercept incoming droplets 310 of liquid. Surface portion 320 comprises a plurality of features 330 so disposed on the surface portion 320 to generate, in response to a drop of liquid impinging upon surface portion 320 at a relative velocity within a given relative velocity range, a back pressure that is greater than the wetting-promoting pressure, such as, for example, the Bernoulli pressure, generated by an impacting drop 310. The surface portion 320 is then exposed to droplets 310 of liquid moving at relative velocities within the given relative velocity range so that the droplets 310 impinge upon surface portion 320. In certain embodiments, the relative velocity range is encompasses velocities of at least about 5 m/s.

As noted above, in some embodiments features 310 may be characterized by parameters such as a median size, *a,* a median height displacement, *h,* and a median spacing, *b.* In certain embodiments, the method described above further comprises specifying a back pressure minimum requirement based on expected operating conditions for the article; calculating back pressure as a function of the feature characterization parameters (for example, *a, b, h*); and selecting appropriate values of these parameters so that the surface portion 320 is expected to generate a back pressure greater than or equal to the back pressure minimum requirement. As an example, where operating conditions for article 300 indicate that drop velocities will be up to about 60 m/s, the calculation of back pressure as a function of pore size shown in Figure 5 specifies a median pore size of up to about 100 nm. Thus, in the design of an article having pores as surface features in accordance with embodiments of the present invention, the article would be provided with pores having a median pore size of up to about 100 nm.

Certain characteristics of surface portion 320 and features 330 are common across the various embodiments described above, regardless of the type of surface features 330 being used. For example, in some embodiments, surface portion 320 comprises a ceramic, a metal, a semi-metal, or a polymer. Where the plurality of features 330 includes pores, surface portion 320 comprises a porous material, such as, for example, an anodized metal oxide. Anodized aluminum oxide is a particular example of a porous material that may be suitable for use in some embodiments. Anodized aluminum oxide typically comprises columnar pores, and pore parameters such as diameter and aspect ratio may be closely controlled by the anodization process.

In certain applications, service conditions are conducive to the use of polymeric coatings, fluorinated materials, and other traditional low-wettability materials. Thus, in certain embodiments of the present invention, these materials may be applied to surface portion 320 to provide enhanced resistance to wetting. However, many applications, including, for instance, certain medical devices, heat exchangers, aircraft components, and turbomachinery such as aircraft engines, which would benefit from the use of articles having low wettability in accordance with embodiments of the present invention, are subject to harsh chemical, thermal, and/or tribological conditions that preclude the use of traditional polymer-based low-wettability materials and coatings. Thus, in some embodiments, the surface portion 320 and its features 330 are free of any polymeric coatings; in some embodiments, they consist essentially of metallic, intermetallic, semi-metallic, or ceramic materials.

In some embodiments of the present invention, features 330 comprise a material selected from the group consisting of a metal, an intermetallic compound, and a semi-metal. Although these materials have moderate to high inherent wettability for many important liquids, such as water and oil, altering article surfaces in accordance with embodiments of the present invention may significantly reduce the wettability of articles made from such materials. Examples of suitable metals from which surface portion 320 and features 330 can be made include, but are not limited to, aluminum, copper, iron, nickel, cobalt, gold, platinum, titanium, zinc, tin, and alloys comprising at least one of these elements, such as steel, high-temperature superalloys, and aluminum alloys. Examples of suitable intermetallic compounds include, but are not limited to, compounds containing at least one of the elements listed above, such as aluminides and silicides. Silicon is one non-limiting example of a suitable semi-metal. In some embodiments, surface portion 320 comprises the same material as the features 130. In particular embodiments, surface portion 320 and features 330 are integral and, in particular embodiments, comprise the same metal composition.

Metals, ceramics, semi-metals, and intermetallic materials generally have moderate to high wettability, and thus the effect of surface texturing by providing features 330 as described herein may not always suffice to provide desired levels of wettability, absent some means of lowering the inherent wettability of the features 330. The inherent wettability of the material used for surface portion 320 that will actually contact the liquid, in some embodiments, is sufficiently low to generate, with a static drop of the liquid, a contact angle of at least about 70 degrees; in some embodiments this angle is at least about 90 degrees, and in particular embodiments, the angle is at least about 110 degrees.

In some embodiments, surface portion 320 further comprises a surface energy modification material (not shown). This material is formed, in one embodiment, by overlaying a layer of material at surface portion 320, resulting in a coating disposed over features 330. Hydrophobic hardcoatings are one suitable option. Diamond-like carbon (DLC) coatings, which typically have high wear resistance, have been applied to metallic articles to improve resistance to wetting (see, for example, US6623241). Other hard coatings such as nitrides or oxides, such as tantalum oxide, may also serve this purpose. These hardcoatings, and methods for applying them (CVD, PVD, etc.), are known in the art, and may be of particular use in harsh environments. Fluorinated materials, such as fluorosilanes, are also suitable coating materials that exhibit low wettability for certain liquids, including water. Finally, if conditions allow, the coating may comprise a polymeric material. Examples of polymeric materials known to have advantageous resistance to wetting by certain liquids include silicones, fluoropolymers, urethanes, acrylates, epoxies, polysilazanes, aliphatic hydrocarbons, polyimides, polycarbonates, polyether imides, polystyrenes, polyolefins, polypropylenes, polyethylenes or mixtures thereof.

Alternatively, the surface modification layer may be formed by diffusing or implanting molecular, atomic, or ionic species into the surface portion 320 to form a layer of material having altered surface properties compared to material underneath the surface modification layer. In one embodiment, the surface energy modifying material comprises ion-implanted material, for example, ion-implanted metal. Ion implantation of metallic materials with ions of boron (B), nitrogen (N), fluorine (F), carbon (C), oxygen (O), helium (He), argon (Ar), or hydrogen (H) may lower the surface energy (and hence the wettability) of the implanted material. See, for example, A. Leipertz et al., "Dropwise Condensation Heat Transfer on Ion Implanted Metallic Surfaces," http://www.ltt.uni-erlangen.de/inhalt/pdfs/tk_gren.pdf; and Xuehu Ma et.al, "Advances in Dropwise Condensation Heat Transfer: Chinese Research", Chemical Engineering Journal, 2000, volume 78, 87—93.

In one embodiment, a diffusion hardening processes such as a nitriding process or a carburizing process is used to dispose the surface modification material, and thus the surface modification material comprises a nitrided material or a carburized material. Nitriding and carburizing processes are known in the art to harden the surface of metals by diffusing nitrogen or carbon into the surface of the metal and allowing strong nitride-forming or carbide-forming elements contained within the metal to react to form a layer of nitride material or a dispersion of nitride particles, depending on the metal composition and processing parameters. For steels, nitriding processes usually take place in a temperature range of about 500°C - 550°C. Nitriding processes known in the art include ion nitriding, gas nitriding, and salt-bath nitriding, so named based upon the state of the nitrogen source used in the process. These processes have shown a remarkable potential for lowering metal surface energy. In one example, the contact angle (measured using water as reference liquid) of 403 steel having a surface finish of 32 microinches was increased from about 60 degrees to about 115 degrees by ion nitriding. A preliminary observation of the surface of the nitrided surface applied to mirror-finish specimens (< 2 microinches) suggests that the nitriding process may deposit nano-scale features at the surface in addition to reducing the inherent surface energy of the metal.

The surface modification layer may be applied after features 330 have been provided on surface portion 320. Alternatively, features 330 may be formed after applying surface modification layer to surface portion 320. The choice of order will depend on the particular processing methods being employed and the materials being used for features 330 and surface portion 320.

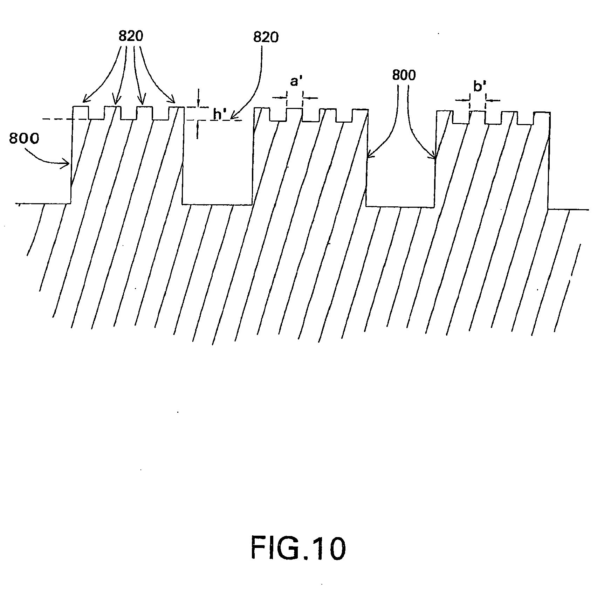

In many applications, features of multiple size scales are desirable, in part because impacting drops of liquid may break apart into smaller drops, or a range of drop sizes may be inherently present in the environment, thus requiring features of smaller size scales to be present to maintain the effects described above. Moreover, the presence of multiple size-scale features amplifies the low-wettability effects obtained on surfaces textured as described above, allowing for a broader acceptable range of feature size, shape, and orientation. As shown in Figure 10, in some embodiments at least one feature 800 comprises a plurality of secondary features 810 disposed on the feature 800. Although the example depicted in Figure 10 shows an ordered array of identical secondary features 810, such an arrangement is not a general requirement; random arrangements and other distributions in size, shape, and orientation may be appropriate for specific applications. Secondary features 810 may be characterized by a height dimension h' referenced to a feature baseline plane 820 (whether the secondary feature protrudes above plane 820 or is a pore disposed in feature 800 to a depth h' below plane 820), a width dimension a', and a spacing dimension b', all parameters defined analogously to a, b, and h described above. The parameters a', b', and h' will often be selected based on the conditions particular to the desired application. In some embodiments a', b', and h' are all within the range from about 1 nm to about 1000nm.

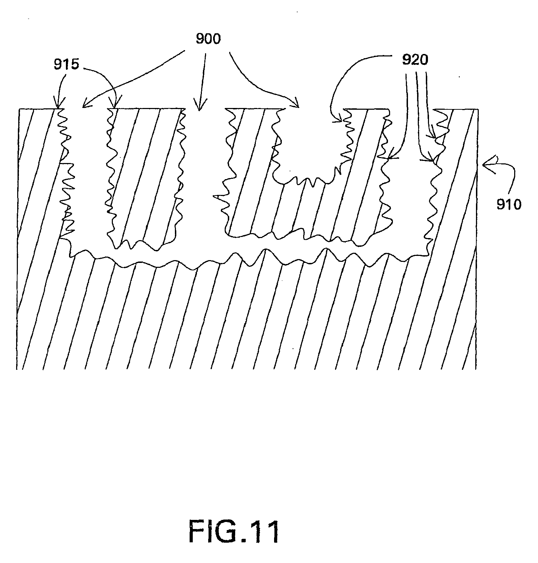

Another example of secondary features is depicted in Figure 11. In this example, pores 900 are cavity features disposed on surface portion 910. In this exemplary embodiment, pore walls 915 comprise secondary features 920 disposed at pore walls 915. Secondary features 920 may be structures protruding above pore walls 915 or depressions disposed in the walls 915. In certain embodiments, the secondary features 920 have a characteristic dimension, such as, for example, the aforementioned height h', width a', or spacing b', of less than 1 micrometer.

Regardless of which of the embodiments of the present invention is contemplated, features 330 (Figure 3) can be fabricated and provided to article 300 by a number of methods. In some embodiments, features 330 are fabricated directly on surface portion 320 of article 300. In other embodiments, features 330 are fabricated separately and then disposed onto article 300 at surface portion 320. Disposition of features 330 onto article 300 can be done by individually attaching features 330, or the features 330 may be disposed on a sheet, foil or other suitable medium that is then attached to article 300. Attachment in either case may be accomplished through any appropriate method, such as, but not limited to, welding, brazing, mechanically attaching, or adhesively attaching via epoxy or other adhesive.

The disposition of features 330 may be accomplished by disposing material onto the surface of the article, by removing material from the surface, or a combination of both depositing and removing. Many methods are known in the art for adding or removing material from a surface. For example, simple roughening of the surface by mechanical operations such as grinding, grit blasting, or shot peening may be suitable if appropriate media/tooling and surface materials are selected. Such operations will generally result in a distribution of randomly oriented features on the surface, while the size-scale of the features will depend significantly on the size of the media and/or tooling used for the material removal operation. Lithographic methods are commonly used to create surface features on etchable surfaces, including metal surfaces. Ordered arrays of features can be provided by these methods easily; the lower limit of feature size available through these techniques is limited by the resolution of the particular lithographic process being applied. In the same vein, electroplating methods are also commonly used to add features to surfaces. An electrically conductive surface may be masked in a patterned array to expose areas upon which features are to be disposed, and the features may be built up on these exposed regions by plating. This method allows the creation of features having higher aspect ratios than those commonly achieved by etching techniques. In particular embodiments, the masking is accomplished by the use of an anodized aluminum oxide (AAO) template having a well-controlled pore size. Material is electroplated onto the substrate through the pores, and the AAO template is then selectively removed; this process is commonly applied in the art to make high aspect ratio features such as nanorods. Nanorods of metal and metal oxides may be deposited using commonly known processing, and these materials may be further processed (by carburization, for example) to form various ceramic materials such as carbides. Coatings may be applied to the features to provide even better wettability properties as described above.

Micromachining techniques, such as laser micromachining (commonly used for silicon and stainless steels, for example) and etching techniques (commonly used for silicon) are suitable methods as well. Such techniques may be used to form cavities (as in laser drilling) as well as protruding features. In short, any of a number of deposition processes or material removal processes commonly known in the art may be used to apply features to a surface. As described above, the features may be applied directly onto article 300, or applied to a substrate that is then attached to article 300.

EXAMPLES

The following example is provided to further illustrate exemplary embodiments of the present invention, and should not be construed as limiting the invention.

Example 1: Three specimens having unique textured surfaces were fabricated from silicon using standard photolithography techniques followed by deep reactive ion etching. Specimen A had rectangular prism post features of width 15 micrometers and spacing 150 micrometers. Specimen B had rectangular prism post features of width 15 micrometers and spacing 5 micrometers. Specimen C had rectangular prism post features of width 3 micrometers, spacing 30 micrometers, and further had silicon-rich dendrites attached to the posts as secondary features (described above). The dendrites were spaced apart by a mean distance of about 100 nm, and were grown on the posts by preferential etching and re-deposition during the reactive ion etching process. Each specimen was coated with tridecafluoro-1,1,2,2-tetrahydrooctyl-trichlorosilane (hereinafter "fluorosilane") via vapor deposition The specimens were then subjected to impact by a 1 millimeter-radius water droplet having a velocity of about 3 m/s. The droplet therefore had a water hammer pressure of about 1500 kiloPascals (kPa) and a Bernoulli pressure of about 5 kPa at impact, and specimens A, B, and C were expected to generate respective back pressures of about 0.08 kPa, 12 kPa, and 1200 kPa based on their feature size, shape, and spacing. In each case, the impacting droplets initially exhibited similar spreading behavior immediately following impact, but subsequently exhibited strikingly different retracting behavior. The droplet impacting specimen A did not retract appreciably and maintained substantial contact with the specimen. The droplet impacting specimen B retracted nearly entirely, maintaining only a contact area that was a small fraction of the diameter of the pre-impact droplet. The droplet impacting specimen C retracted entirely, lifting off completely from the specimen.

Example 2: Specimen B was also subject to impact by droplets with 350 micrometer diameters moving at 10 m/s relative to the specimen. Droplets therefore had a water hammer pressure of about 5,000 kPa and a Bernoulli pressure of about 50 kPa. As described in Example 1, Specimen B is expected to provide 1,200 kPa of back pressure. Impacting droplets retracted nearly entirely.

Example 3: A specimen of silicon coated with carbon nanotube (CNT) nanostructures was fabricated by a chemical vapor deposition process, using ethylene and methane as carbon sources and a 4-to-1 nickel-iron alloy as a catalyst. This specimen was then coated with fluorosilane via vapor deposition as in Example 1. CNT diameters were roughly 100 nanometers, but because CNTs coil and are arrayed randomly, an average effective spacing is difficult to estimate. The specimen was subject to impact by droplets moving at 3 m/s and 10 m/s, similar to those in Examples 1 and 2, respectively. Droplets moving at 3 m/s retracted completely, while those moving at 10 m/s retracted nearly entirely.

Example 4: A specimen of nanoporous aluminum oxide was fabricated by immersing aluminum-coated silicon in a 0.3-molar solution of oxalic acid at room temperature (constant 40 volts DC for 6min), yielding a porous anodized aluminum oxide (AAO) layer about 1 micrometer in thickness. These pores were then widened with a solution of 0.2-molar phosphoric acid at room temperature for 120min to yield an average pore size of about 90 nanometers that have a typical edge-to-edge spacing of about 10 nanometers. This specimen was then coated with fluorosilane via vapor deposition as in Example 1. The specimen was subject to impact by droplets moving at 10 m/s and 20 m/s. Droplets therefore had water hammer pressures of about 5,000 and 10,000 kPa and Bernoulli pressures of about 50 and 200 kPa, respectively. This specimen is expected to provide a back pressure of about 1,000 kPa, based on the feature size and shape. All droplets moving at 20 m/s retracted nearly entirely. Droplets moving at 10 m/s exhibited mixed behavior: some drops showed similar to the 20 m/s droplets, while others retracted completely.

Example 5: A vane from a CF6 aircraft engine (stage 1) was coated with CNTs using the parameters discussed in Example 3. The leading edge of the vane was subjected to impact by 1-millimeter radius droplets moving about 3 m/s. By contrast to specimens in examples described thus far, the leading edge is highly curved, with a radius of curvature of a few millimeters. Droplets retracted completely.

Example 6: A pipe composed of 6061 aluminum with a diameter of about one inch was first polished with fine sandpaper and then coated with AAO via an anodization process similar to the one described in Example 4. This curved surface was subjected to impact by 1-millimeter radius droplets moving about 3 m/s. Droplets retracted completely.

While various embodiments are described herein, it will be appreciated from the specification that various combinations of elements, variations, equivalents, or improvements therein may be made by those skilled in the art, and are still within the scope of the invention as defined in the appended claims.

PARTS LIST

drop 100
surface 120
features 130
surface 200
drop 220
features 230
article 300
droplets 310
surface portion 320

surface features 330
surface portion 400
plurality of pores 410
article 420
surface portion 500
plurality of elevations 510
component 600
surface portion 610
droplets 620
fluid flow path 630
plurality of elevations 640
feature 800
secondary featu res 810
feature baseline plane 820
pores 900
surface portion 910
pore walls 915
secondary features 920

**Claims**

1. An article (420) resistant to wetting by liquid droplets impinging upon the article (420), the article (420) comprising:

a surface portion (400) oriented to intercept droplets of a liquid impinging upon the article (420), the surface portion (400) comprising a plurality of pores (410),
wherein the plurality of pores (410) has a median size, $a$, a median depth, $h$, and a median spacing, $b$;
wherein $a$, $b$, and $h$ are selected to generate, in response to a droplet of the liquid impinging upon the surface portion (400) at a relative velocity $v$, a back pressure that is greater than a Bernoulli pressure generated by the drop upon impact on the surface portion (400).

2. The article (420) of claim 1, wherein a majority of the pores (410) are isolated from each other.

3. The article (420) of claim 1 or claim 2, wherein the ratio of $b/a$ is up to about 10.

4. The article (420) of any preceding claim, wherein $a$ is up to about 10 micrometers, and the ratio of $b/a$ is up to about 6.

5. The article (420) of any preceding claim, wherein the surface portion (400) further comprises a surface energy modifying material.

6. An article resistant to wetting by liquid droplets impinging upon the article, the article comprising:

a surface portion (500) oriented to intercept incoming droplets of a liquid, the surface portion (500) comprising a plurality of elevations (510), wherein the plurality of elevations (510) has a median size, $a$; a median height, $h$; and a median spacing, $b$;
wherein $a$, $b$, $h$, are selected to generate, in response to a droplet of the liquid having a droplet size of at least about 1 micrometer impinging upon the surface portion (500) at a relative velocity of at least 5 meters per second, a back pressure that is greater than a Bernoulli pressure generated by the drop upon impact on the surface portion (500).

7. The article of claim 6, wherein $a$ is up to about 300 micrometers, and $b/a$ is up to about 10.

8. The article of claim 6 or claim 7, wherein the surface portion (500) further comprises a surface energy modifying material.

9. A component (600) of a steam turbine assembly, comprising:

a surface portion (610) oriented to intercept incoming droplets (620) of a liquid entrained in a fluid flow path (630) of the steam turbine assembly, the surface portion (610) comprising a plurality of elevations (640),
wherein the plurality of elevations (640) has a median size, $a$; a median height, $h$; and a median spacing, $b$;
wherein $a$, $b$, $h$, are selected to generate, in response to a droplet of the liquid impinging upon the surface portion (610) at a relative velocity $v$, a back pressure that is greater than a Bernoulli pressure generated by the drop upon impact on the surface portion (610).

10. The component (600) of claim 9, wherein $a$ is up to about 5 micrometers, and $b/a$ is up to about 10.

# FIG.1

# FIG.2

330

320

310

300

# FIG.3

a

410

b

h

400

# FIG.4

FIG.5

FIG.6

FIG.7

FIG.8

FIG.9

FIG.10

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   US 6623241 B

**Non-patent literature cited in the description**

*   **A. LEIPERTZ et al.** *Dropwise Condensation Heat Transfer on Ion Implanted Metallic Surfaces, http://www.ltt.uni-erlangen.de/inhalt/pdfs/tk_gren.pdf*

*   **XUEHU MA.** Advances in Dropwise Condensation Heat Transfer: Chinese Research. *Chemical Engineering Journal,* 2000, vol. 78, 87-93